# FASCICULE DE BREVET EUROPEEN

(11) **EP 3 186 126 B1**
(45) Date de publication et mention de la délivrance du brevet: **30.01.2019**
(21) Numéro de dépôt: 15759911.9
(22) Date de dépôt: 20.08.2015
(51) Int. Cl.: B60J 10/36, B60J 10/84, B61D 19/00

(54) **SYSTÈME D'ÉTANCHÉITÉ POUR UN OUVRANT COMPORTANT UN PROFILE RECEVANT UN JOINT D'ÉTANCHÉITÉ VERROUILLE PAR UNE CLÉ COULISSANTE**
DICHTUNGSSYSTEM FÜR ÖFFNUNGSFÄHIGES PANEEL MIT EINEM PROFILELEMENT ZUR AUFNAHME EINER DICHTUNG, DIE DURCH EINE GLEITFEDER FIXIERT IST
SEALING SYSTEM FOR AN OPENABLE PANEL COMPRISING A PROFILE MEMBER RECEIVING A SEAL LOCKED BY A SLIDING KEY

(30) Priorité: 28.08.2014 FR 1458029
(43) Date de publication de la demande: 05.07.2017
(73) Titulaire: Faiveley Transport Tours, 37701 Saint-Pierre-des-Corps (FR)
(72) Inventeur: SALLES, Olivier, F-35133 Lecousse (FR); BAILLARGER, Laurent, F-37300 Joue-les-Tours (FR)
(74) Mandataire: Schmidt, Martin Peter
(86) Numéro de dépôt international: PCT/FR2015/052229
(87) Numéro de publication internationale: WO 2016/030611

(56) Documents cités:
- EP-A1- 2 243 678
- EP-A1- 2 689 949
- CH-A- 399 925
- FR-A1- 2 783 555

## Description

### Domaine technique de l'invention

La présente invention concerne un système d'étanchéité pour un ouvrant, ainsi qu'un ouvrant de véhicule équipé d'un tel système d'étanchéité, et un procédé de montage et de démontage du joint d'étanchéité de ce système (cf. par exemple FR 2 783 555 A1).

### Etat de la technique

Un type de système d'étanchéité connu, en particulier pour des ouvrants comme des portes de véhicules ferroviaires, comporte un profilé rigide, réalisé par exemple en alliage d'aluminium, prévu pour être fixé sur le contour de la porte, qui présente un logement recevant par une insertion suivant un axe, une partie d'accrochage d'un joint d'étanchéité formant un profilé de section constante réalisé en élastomère.

La partie d'accrochage du joint d'étanchéité comporte deux bossages latéraux extérieurs disposés de chaque côté de l'axe d'insertion. Lors de son introduction dans le logement du profilé rigide, la partie d'accrochage se déforme pour s'introduire au-delà de formes d'ancrage réalisées de chaque côté du profilé, qui sont tournés vers l'axe d'insertion. Chaque bossage latéral vient s'ajuster dans un creux correspondant du profilé pour assurer une fixation du joint d'étanchéité.

Le contour de l'ouvrant peut être droit, ou comporter un certain galbe, le profilé rigide ainsi que le joint d'étanchéité suivant alors ce galbe. Le joint d'étanchéité peut être réalisé en particulier en silicone, en EPDM ou en polychloroprène.

Toutefois un problème qui se pose, en particulier pour des véhicules recevant du public soumis à des contraintes élevées et à des sollicitations fréquentes, comme des voitures ferroviaires, qui peuvent de plus subir des actes malveillants de vandalisme, est qu'il faut prévoir une tenue à l'arrachement élevée.

Cet arrachement peut comporter une traction suivant l'axe d'insertion en un point quelconque du joint d'étanchéité, ou l'application d'un couple de basculement latéral sur ce joint. Il peut comporter aussi une traction sur une extrémité du joint d'étanchéité, qui subit alors un pelage facilitant son arrachement.

Pour assurer une tenue élevée du joint d'étanchéité, il faut prévoir des bossages de ce joint et des formes d'ancrage correspondantes du profilé présentant une hauteur assez grande, ou une rigidité importante de la matière élastomère, ce qui augmente la tenue.

Cependant on augmente alors l'effort nécessaire pour l'introduction de la partie d'accrochage dans le profilé rigide, qui se fait en particulier en frappant dessus avec un maillet, ce qui pose des problèmes de temps d'assemblage, ainsi que de pénibilité de cette opération par les coups répétés pouvant entraîner des problèmes de santé sur l'opérateur, comme des tendinites du coude ou de l'épaule.

De plus le démontage pour effectuer des opérations de maintenance sur la porte ou pour remplacer le joint est aussi plus compliqué à réaliser, et le temps de démontage est plus long. Sur des véhicules ferroviaires soumis à des sollicitations fréquentes, la maintenance peut prévoir en particulier un échange des joints tous les dix ans.

Il est connu par ailleurs d'utiliser des joints d'étanchéité assemblés par un coulissement longitudinal dans une forme complémentaire du profilé rigide. Toutefois ce type de joint d'étanchéité est difficile à mettre en place pour des profilés de grande longueur et lorsque le profilé comporte une courbure assez prononcée, par exemple sur un ouvrant présentant un galbe important.

Le document FR 2 738 555 A1 cité auparavant décrit par contre un système d'étanchéité comportant un joint d'étanchéité et un profilé rigide de support avec un logement apte à recevoir une partie d'accrochage souple dudit joint, ainsi qu'un matériau formant une clé de verrouillage prévue pour être introduite dans ledit logement perpendiculairement à la direction principale du profilé.

Un autre type de joint d'étanchéité connu, présenté notamment par le document EP 2 689 949 A1, comporte un volume intérieur étanche dans lequel on applique une dépression afin de réaliser son resserrement qui facilite l'insertion dans le profilé rigide.

Ce type de mise en place nécessite une étanchéité aux extrémités du profilé, ainsi que l'utilisation de matériel pour réaliser la dépression, ce qui rend les opérations de pose et de dépose plus complexes.

Pour améliorer la tenue du joint d'étanchéité, un autre type de joint connu, présenté notamment par le document WO 2008/155098 A2, comporte vers l'avant suivant la direction d'insertion deux lèvres symétriques par rapport à l'axe d'insertion, qui sont d'abord introduites dans un creux du profilé rigide.

Le joint d'étanchéité comporte vers l'arrière une boucle fermée formant un tube souple réalisant l'étanchéité de l'ouvrant, qui a reçu au préalable à l'intérieur un élément d'expansion constituée par un profilé comprenant une pointe dirigée vers l'avant.

Après la mise en place des lèvres dans le creux du profilé rigide, un opérateur presse suivant l'axe d'insertion, sur l'élément de verrouillage au travers du tube souple pour le glisser entre ces lèvres en les écartant, et assurer le blocage du joint d'étanchéité en comprimant latéralement de manière importante ces lèvres.

Ce système présente plusieurs inconvénients. Tout d'abord, il faut prévoir un joint d'étanchéité ayant déjà reçu à l'intérieur de la boucle fermée l'élément d'expansion. Puis, la mise en place d'élément d'expansion nécessite l'application d'une force importante, exercée sous la forme d'une pression constante ou de coups frappés, en direction du creux du profilé : le montage d'un tel profilé n'est pas facile. Et enfin, après cet assemblage, un autre problème qui se pose est que l'élément d'expansion comprimant latéralement les deux lèvres avec un maintien important, et de plus n'étant pas directement accessible, il ne peut pas être démonté facilement.

Ce type de joint d'étanchéité est prévu en particulier pour une porte de réfrigérateur, sur laquelle on ne fait généralement pas d'intervention de maintenance.

La présente invention a notamment pour but d'éviter ces inconvénients de la technique antérieure.

### Objets de l'invention

La présente invention est définie par les caractéristiques techniques ou démarches décrites dans les revendications 1 et 14 de produit ainsi que 12 et 13 de procédé, et propose à cet effet un système d'étanchéité pour un ouvrant, comportant un profilé rigide présentant un logement recevant par une insertion suivant un axe d'insertion, une partie d'accrochage avant d'un joint d'étanchéité réalisé en élastomère, ce profilé comprenant des formes d'ancrage latérales tournées vers la partie d'accrochage, caractérisé en ce que la partie d'accrochage comporte un volume intérieur recevant un matériau formant une clé de verrouillage prévue pour être introduite longitudinalement après la mise en place du joint d'étanchéité, cette clé assurant un blocage de protubérances latérales sur les formes d'ancrage du profilé.

Un avantage de ce système d'étanchéité est que la partie d'accrochage du joint d'étanchéité peut être très souple, permettant sa mise en place facilement sur le profilé rigide avec un effort réduit. La clé de verrouillage qui est introduite simplement par un coulissement longitudinal dans le volume intérieur, assurant alors un maintien ferme de la partie d'accrochage en empêchant sa déformation, et la sortie des protubérances latérales en dehors des formes d'ancrage du profilé permettant l'arrachement du joint d'étanchéité.

De plus pour le démontage la clé de verrouillage peut coulisser longitudinalement dans le sens inverse pour être extraite, ce qui permet la déformation de la partie d'accrochage, assurant facilement le retrait du joint d'étanchéité lors d'opérations de maintenance.

Le système d'étanchéité selon l'invention peut de plus comporter une ou plusieurs des caractéristiques suivantes, qui peuvent être combinées entre elles.

D'une manière plus générale, un premier objet de l'invention est un système d'étanchéité pour un ouvrant comportant un profilé rigide et un joint d'étanchéité, ledit profilé présentant un logement apte à recevoir une partie d'accrochage dudit joint d'étanchéité, ledit logement dudit profilé comprenant des formes d'ancrage latérales tournées vers la partie d'accrochage, caractérisé en ce que :
- ladite partie d'accrochage souple du joint comprend des formes d'accrochage latérales aptes à coopérer avec lesdites formes d'ancrage latérales du profilé,
- ladite partie d'accrochage comporte un volume intérieur se situant entre lesdites formes d'ancrage latérales, ledit volume intérieur étant destiné à recevoir un matériau formant une clé de verrouillage prévue pour être introduite longitudinalement après la mise en place du joint d'étanchéité dans ledit logement, cette clé assurant un blocage desdites formes d'accrochage latérales de la partie d'accrochage du joint sur lesdites formes d'ancrage latérales du profilé.

Ledit joint peut être un joint souple, mais au moins sa partie d'accrochage doit présenter une certaine souplesse.

Ladite clé peut être un profilé ou un matériau fluide, de préférence un liquide ou un solide granulaire.

Dans un mode de réalisation lesdites formes d'accrochage latérales dudit joint d'étanchéité comprennent des protubérances et des encoches. Lesdites formes d'ancrage latérales du profilé se projettent dans lesdites encoches de la partie d'accrochage du joint et sont bloquées par lesdites protubérances de la partie d'accrochage du joint, empêchant ainsi l'arrachement du joint.

Le système d'étanchéité peut comprendre des bossages se trouvant directement sur la clé et/ou en face de cette clé sur les côtés latéraux de la partie d'accrochage.

Le système d'étanchéité selon l'invention peut comporter un système de fixation longitudinal de la clé de verrouillage.

Dans un mode de réalisation du système d'étanchéité selon l'invention ledit profilé rigide est pris en sandwich par des tôles sensiblement parallèles, formant peau extérieure et intérieure dudit ouvrant. Lesdites tôles peuvent être fixées directement sur les faces latérales du profilé rigide, de manière préférée par exemple par collage. Ledit profilé rigide est avantageusement un profilé métallique (par exemple en alliage d'aluminium), qui peut être fabriqué par extrusion. Dans le cadre de l'invention tel que défini par les revendications est décrit un joint montrant les caractéristiques précitées, apte à être utilisé dans le système d'étanchéité selon l'invention comme décrit ci-dessus.

Encore un autre objet de l'invention est un procédé de montage d'un système d'étanchéité selon l'invention, dans un quelconque de ses modes de réalisation, caractérisé en ce qu'il comporte une étape d'insertion axiale de la partie d'accrochage du joint d'étanchéité dans le logement du profilé rigide, puis une étape d'introduction longitudinale de la clé de verrouillage dans le volume intérieur de ladite partie d'accrochage du joint.

Encore un autre objet de l'invention est un procédé de démontage d'un système d'étanchéité selon l'invention, dans un quelconque de ses modes de réalisation, caractérisé en ce qu'il comporte une étape de retrait longitudinal de la clé de verrouillage hors du volume intérieur, pour permettre de sortir le joint du profilé rigide.

Encore un autre objet de la présente invention est un ouvrant de véhicule, notamment ferroviaire, comprenant un système d'étanchéité selon l'invention, dans un quelconque de ses modes de réalisation, sur tout ou partie de son pourtour.

Un dernier objet pas revendiqué est un véhicule ferroviaire (notamment un wagon de train, de tramway, de métro), un véhicule maritime ou un véhicule routier, qui comporte au moins un ouvrant selon l'invention.

### Figures

L'invention sera mieux comprise et d'autres caractéristiques et avantages apparaîtront plus clairement à la lecture de la description ci-après donnée à titre d'exemple, en référence aux dessins annexés dans lesquels :
- les figures 1a et 1b sont des vues respectivement d'ensemble et de détail du système d'étanchéité avant d'une porte coulissante de véhicule ferroviaire ;
- les figures 2a et 2b sont des vues respectivement d'ensemble et de détail du système d'étanchéité arrière d'une porte coulissante de véhicule ferroviaire ;
- les figures 3a, 3b et 3c sont des vues en coupe transversale d'un système d'étanchéité suivant l'invention, présentant successivement trois étapes de mise en place du joint ;
- les figures 4 à 14 sont des vues en coupe transversale de systèmes d'étanchéité suivant l'invention, selon différentes variantes ;
- la figure 15 est une autre vue d'ensemble du système d'étanchéité arrière d'une porte coulissante de véhicule ferroviaire ;
- les figures 16 et 17 sont des vues en coupe transversale d'un système d'étanchéité suivant l'invention, indiquant chacune des forces d'arrachement radial et perpendiculaire, respectivement ; et
- la figure 18 représente une vue schématique simplifiée d'un système d'étanchéité indiquant la force d'arrachement par pelage.

Les repères numériques suivants sont utilisés dans les dessins :

| | | | |
|---|---|---|---|
| 1 | Ouvrant | 16,17 | Bossage (partie d'accrochage) |
| 2 | Profilé | 18,19 | Côté latéral (flanc) du talon 11 |
| 3 | Logement dans le profilé 2 | 20 | Clé de verrouillage |
| 4,5 | Forme d'ancrage latéral | 21 | Protubérance ou saillie (joint 10) |
| 6 | Fond de la rainure du profilé 2 | 22 | Entaille ou encoche (joint 10) |
| 7,8 | Face latérales du profilé 2 | 23 | Paroi (de la partie d'accrochage) |
| 9a, 9b | Tôles (parois de l'ouvrant 1) | 24 | Bande sensible électrique |
| 10 | Joint | 25 | Lèvre |
| 11 | Partie d'accrochage (talon) | 26 | Zone tubulaire d'étanchéité |
| 12 | Volume intérieur (évidement) | 27 | Surface externe lisse |
| 13 | Partie d'étanchéité du joint 10 | 28 | Vis |
| 14,15 | Faces de la clé | 29a,29b | Faces latérales du profilé 2 |

### Description détaillée de l'invention

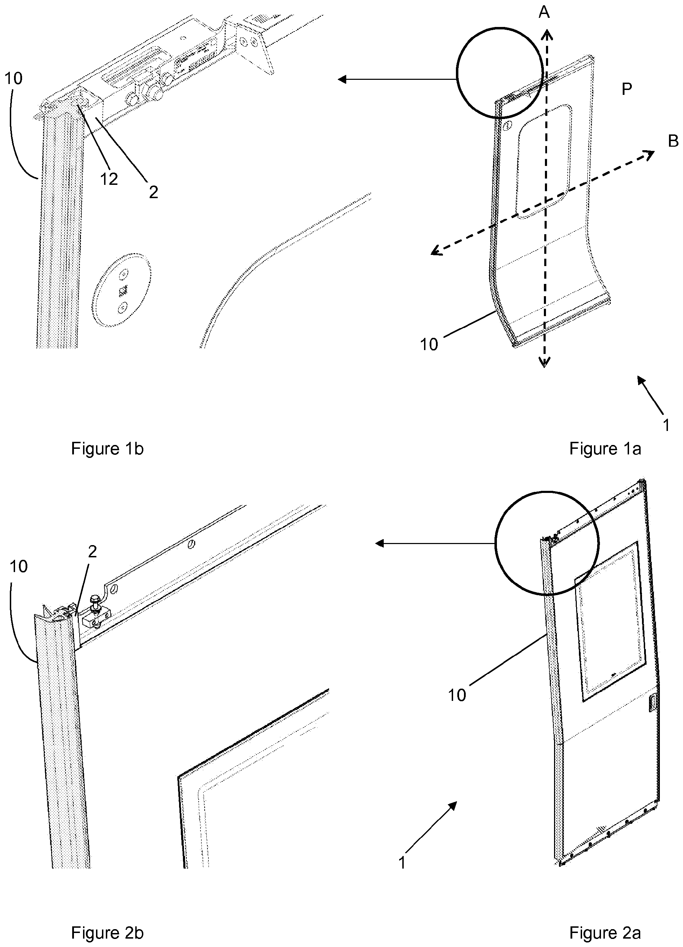

L'invention concerne un système d'étanchéité pour un ouvrant **1,** qui comporte un profilé **2** rigide présentant un logement apte à recevoir un joint **10** qui est inséré suivant un axe d'insertion dans un logement **3** dudit profilé **2.** Ledit joint peut être monté sur un bord latéral de l'ouvrant **1,** comme montré sur la figure 1, et/ou sur un autre bord, par exemple supérieur ou inférieur. Le joint **10** selon l'invention peut être un joint dit « avant », comme montré sur la figure 1, ou un joint dit « arrière » comme montré sur la figure 2.

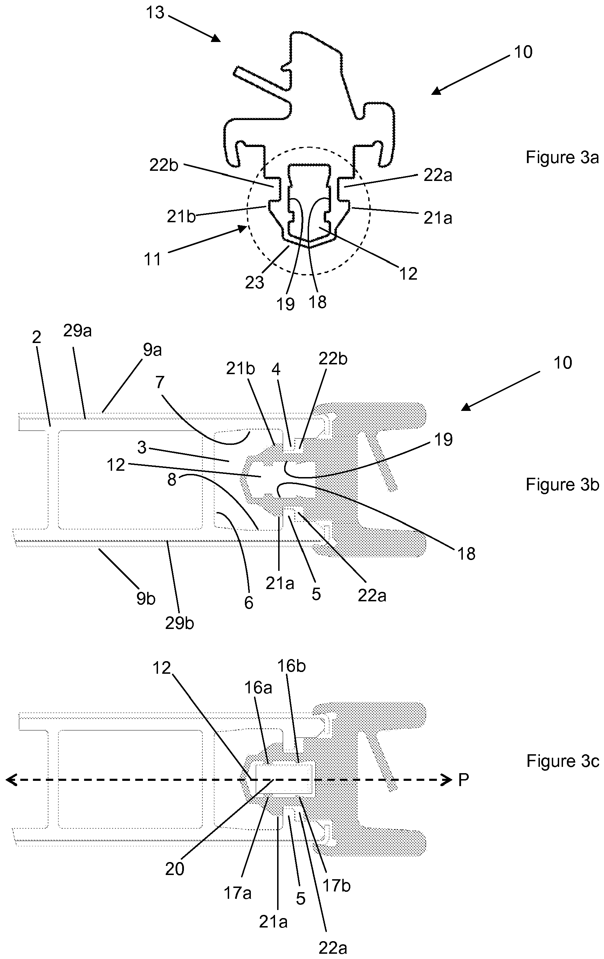

En référence à la figure 1, on définit un axe A, appelé axe « principal » ou « longitudinal », un axe B, appelé axe « secondaire » ou « transversal », et un plan P dit « principal » dans lequel sont inclus les axes A et B ; ce plan principal est indiqué également sur la figure 3c.

Comme montré sur la figure 3a, ledit joint **10** comporte une partie d'accrochage (talon) **11** et une partie d'étanchéité **13.**

Comme montré sur la figure 3b, ledit logement **3** peut avoir la forme d'une rainure comportant deux faces latérales **7,8** typiquement parallèles et un fond de rainure **6.** Sur chacune desdites faces latérales **7, 8** est aménagé une forme d'ancrage latéral **4, 5** qui se projette à l'intérieur dudit logement **3** ; dans un mode de réalisation ces formes d'ancrage latéral **4, 5** sont des protubérances.

Ledit profilé rigide **2** peut être réalisé en tout matériau rigide approprié, métallique (par exemple aluminium) ou composite. Il peut comporter des tôles **9a, 9b** formant les parois intérieures et extérieures de l'ouvrant **1.** Ces tôles **9a, 9b** sont avantageusement sensiblement parallèles. Lesdites tôles **9a, 9b** peuvent être fixées sur le profilé rigide **2** par toute technique appropriée, par exemple par soudage ou vissage, ou encore par collage. Dans un mode de réalisation avantageux les tôles **9a, 9b** sont dans des plans parallèles à ceux des faces latérales **29a, 29b** du profilé **2** ; lesdites tôles **9a, 9b** peuvent être collées directement sur lesdites faces latérales **29a,29b** du profilé rigide **2.**

Ladite partie d'accrochage (talon) **11** comporte des moyens de fixations **21, 22** comprenant des protubérances ou saillies **21a, 21b** et des entailles ou encoches **22a, 22b** aptes à coopérer avec lesdites formes d'ancrage latéral **4, 5** et tournés vers ces dernières, pour bloquer le joint **10** de manière à ce qu'il résiste à l'arrachement dans une direction opposée à la profondeur dudit logement **3.** Ainsi le talon **11** du joint **10** peut être emboîté dans le logement **3** du profilé **2** ; cette insertion peut se faire axialement par un mouvement de la partie d'accrochage **11** du joint 10 selon une direction transversale, à savoir selon l'axe B de la figure 1a. Lors de ce mouvement en direction du fond de la rainure le talon **11** se déforme élastiquement pour permettre le passage des protubérances **21** du joint **10** devant les formes d'ancrage latéral **4, 5** du profilé **2,** se détend lorsque lesdites formes d'ancrage latéral **4, 5** du profilé **2** se trouvent face aux entailles **22a,22b** du joint **10,** et reste bloqué.

Ladite partie d'accrochage **11** du joint **10** comprend un volume intérieur (évidement) **12** délimité latéralement par des côtés latéraux (flancs) **18,19.** Le volume intérieur **12** peut être fermé (typiquement par une paroi **23**) ou ouvert en direction du fond **6** de la rainure **3.** Comme montré sur la figure 3c, le volume intérieur **12** peut recevoir un matériau formant une clé de verrouillage **20.** Cette clé **20** assure un blocage des moyens de fixation **21, 22** du joint **10** sur les formes d'ancrage **4, 5** du profilé **2.** Plus précisément, cette clé empêche les flancs (côtés latéraux) **18,19** du talon **11** de céder (c'est-à-dire de se déformer élastiquement vers l'intérieur du volume intérieur **12** pour laisser passer les protubérances **21a,21b** du joint **10** devant les protubérances **4,5** du profilé **2**) lors de l'application d'une force d'arrachement en direction opposée à la profondeur de la rainure **6.**

Dans un mode de réalisation particulièrement avantageux, et comme cela est montré sur les figures 3 à 14, le talon **11** présente une structure symétrique par rapport au plan principal P. Ainsi, les protubérances **21a,21b** se trouvent de part et d'autre de ce plan. De même, les entailles **22a,22b** se trouvent de part et d'autre de ce plan. La rainure du profilé rigide **2** avec ses formes d'ancrage latéral **4,5** présente également une symétrie par rapport au plan P. En revanche, la partie d'étanchéité **13** du joint **10** n'a pas besoin de présenter une structure symétrique par rapport au plan P.

Les inventeurs ont trouvé que la déformation élastique de la partie d'accrochage **11** du joint **10** lors de son introduction en direction du fond de la rainure **6** est plus facile si le volume intérieur **12** se trouve entre les formes d'accrochage latérales **21,22,** et en particulier entre les entailles **22a,22b,** du joint **10,** et ce mode de réalisation, représenté sur les figures 3 à 12, est préféré. Dans les modes de réalisation les plus préférés, représentés sur les figures 3 à 11, la clé **20** aussi se trouve entre les formes d'accrochage latérales **21,22,** et en particulier entre les entailles entailles **22a,22b,** du joint **10** car cela renforce la résistance du joint contre l'arrachement.

Selon un mode de réalisation particulier de la partie d'accrochage (talon) **11,** le côté latéral (flanc) **18,19** du talon **11** peut comporter des bossages **16,17.** Ces bossages **16,17** peuvent entrer en contact avec la clé **20** et stabiliser le volume intérieur **12** de la partie d'accrochage **11** contre la déformation, et en particulier contre la déformation du flanc **18,19,** lors de l'arrachement du joint **10,** comme décrit ci-dessus. Ces bossages **16,17** peuvent prendre différentes formes telles des plots (disposées de différentes manières) ou une ou plusieurs lignes continues (de préférence parallèles au sens longitudinal du profilé).

Avantageusement sur au moins un côté latéral **18,19** (et préférentiellement sur chaque côté) lesdits bossages **16a,16b,17a,17b** se trouvent de part et d'autre de la position que prend dans le système d'étanchéité selon l'invention la forme de fixation **4,5** du profilé **2** par rapport aux protubérance **21,21b,** de manière à stabiliser la coopération entre les formes d'ancrage latérales **4,5** du profilé **2** et les moyens de fixation **21,22** de la partie d'accrochage **11** du joint **10.** Alternativement (non montré sur les figures) les bossages peuvent se trouver sur la clé **20.**

Les bossages **16,17** peuvent faciliter l'introduction de la clé **20** dans l'évidement **12** du joint **10** car ils diminuent la surface de frottement entre les surfaces latérales **14,15** de la clé **20** et les surface latérales intérieures **18,19** de l'évidement **12.**

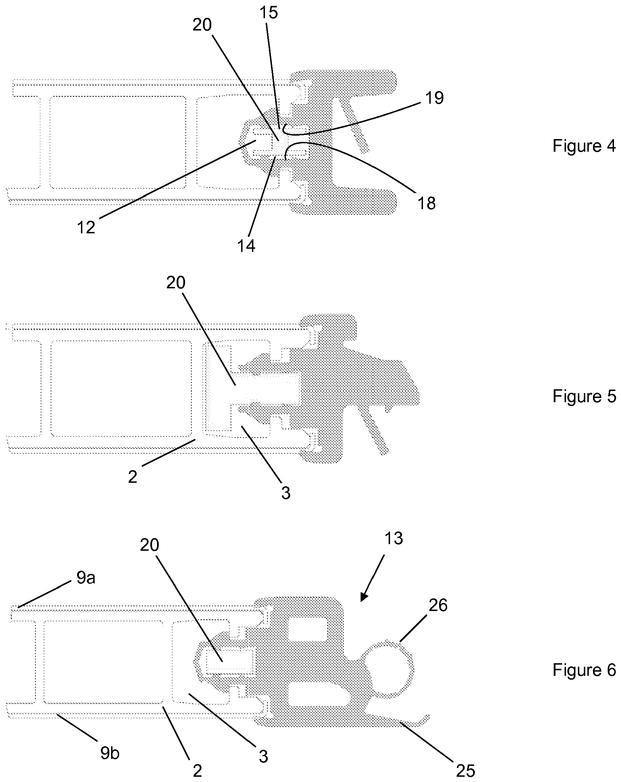

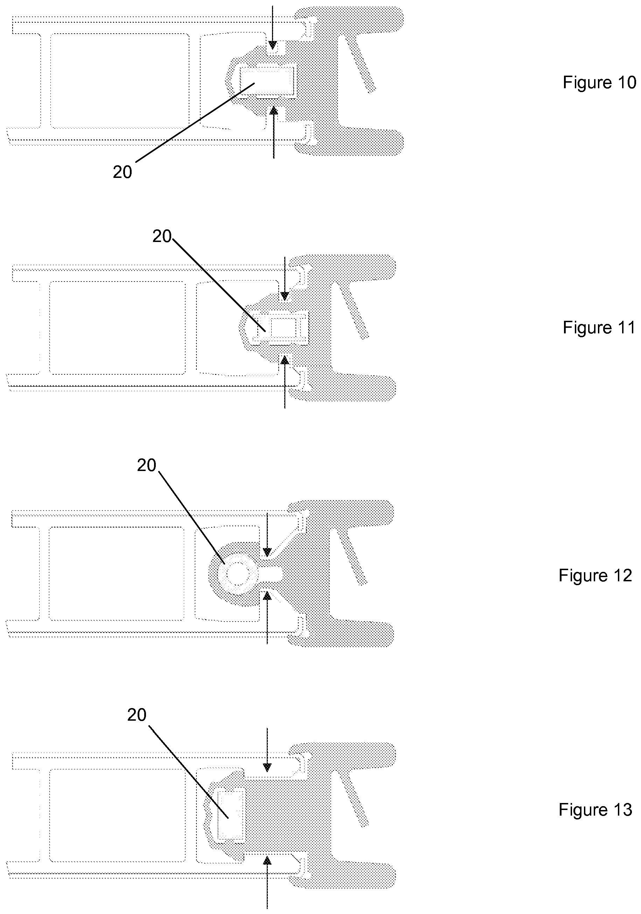

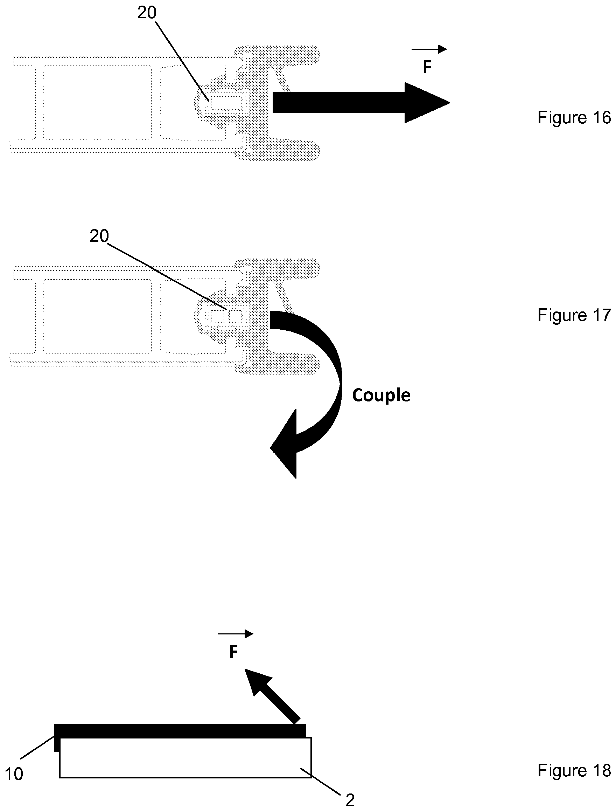

Comme montré sur les figures 3 à 17 la clé **20** peut avoir différentes sections. Elle est normalement un profilé à section constante dans sa longueur. Elle peut présenter une section pleine. Elle peut comprendre un creux longitudinal (comme sur les figures 11, 12, 16 et 17), et/ou des nervures (comme sur les figures 11 et 17). Il peut s'agir d'un profilé en « H », comme sur la figure 4, ou de toute autre section appropriée, par exemple circulaire (comme montré sur la figure 12), triangulaire, polygonale, irrégulière. Avantageusement la clé **20** présente deux faces **14,15** sensiblement parallèles (comme sur les figures 4, 5, 10, 11, 13, 16 et 17) et qui se positionnent dans le système d'étanchéité assemblé parallèlement aux côtés latéraux **18,19** de la partie d'accrochage **11** du joint **10.**

Cependant, lesdits côtés latéraux **18,19** de la partie d'accrochage **11** du joint **10** n'ont pas besoin d'être parallèles ou plats, mais peuvent avoir une autre forme, par exemple galbée. De même, et comme mentionné ci-dessus, les côtés latéraux **14,15** de la clé **20** n'ont pas besoin d'être parallèles ou plats, mais ont avantageusement une forme qui coopère avec la forme desdits côtés latéraux **18,19** de la partie d'accrochage **11** du joint **10.** A titre d'exemple, et comme montrée sur la figure 12, la clé **20** peut présenter une section circulaire, et l'évidement **12** peut présenter une section sphérique qui permet l'insertion de ladite clé **20.**

Ledit joint **10** est typiquement réalisé en élastomère. La surface du volume intérieur **12** de la partie d'accrochage **11** du joint **10** (et si lesdits bossages **16a,16b,17a,17b** sont présents : de préférence au moins ceux-ci) et/ou la surface extérieure de la clé **20** (et si des bossages sont présents sur la clé **20** : de préférence au moins ceux-ci) peut être partiellement ou totalement recouverte par un revêtement de surface glissant pour diminuer le frottement lors de l'insertion de la clé **20** dans le volume intérieur **12** de la partie d'accrochage **11** du joint **10** et faciliter ainsi le montage et le démontage du joint **10.** Ce revêtement de surface peut être choisi en particulier parmi le PTFE (ou du teflon ®), le talc, les graisse, les savons.

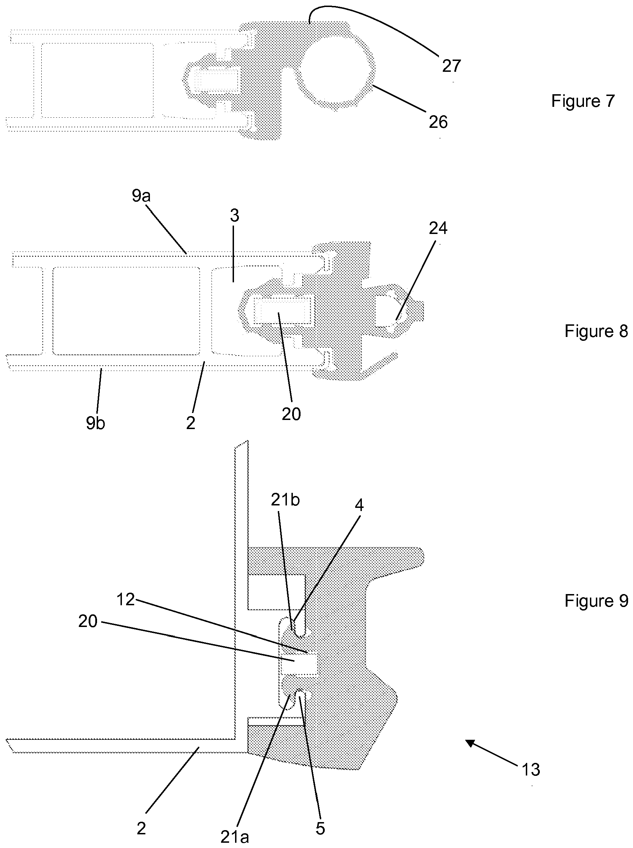

Le système d'étanchéité selon l'invention peut comprendre des joints **10** présentant une partie d'étanchéité **13** de type et forme différent, comme montré sur les figures 6 à 9 : les joints tubulaires avec lèvre (figure 6), les joints tubulaires sans lèvre (figure 7), les joints avec bande sensible électrique (figure 8), les joints sans lèvre (figure 9). Plus particulièrement :
Les joints tubulaires avec lèvre (figure 6) comprennent dans leur partie d'étanchéité **13** au moins une zone tubulaire d'étanchéité **26** compressible assurant l'étanchéité et une lèvre **25** renforçant l'étanchéité et cachant la zone tubulaire **26.**

Les joints tubulaires sans lèvre (figure 7) ne comprennent pas de lèvre, la partie tubulaire **26** n'étant pas visible présentant une surface lisse **27** externe.

Les joints avec bande sensible électrique (figure 8) comprennent une zone tubulaire dans laquelle se trouve une bande sensible **24.**

Les joints sans lèvre (figure 9) montrent une partie d'étanchéité **13** peu déformable, la lèvre et/ou partie tubulaire se trouvant sur le joint en vis-à-vis (non montré sur la figure).

D'une manière générale le système d'étanchéité selon l'invention nécessite une coopération entre le profilé **2** et le joint **10** (et notamment de la partie d'accrochage **11** du joint **10**). La forme du profilé **2** et de ladite partie d'accrochage **11** peut être différente, la seule condition étant que cette forme présente un resserrement local des faces latérales **7,8** à l'intérieur du profilé **2** (ledit resserrement pouvant former des formes d'ancrage latéral **4,5**) qui permet de coopérer avec les moyens de fixation **21,22** de la partie d'accrochage **11** du joint **10.**

Les figures 10 à 14 montrent différents formes géométriques du système d'étanchéité selon l'invention ; le resserrement est indiqué par deux flèches.

Selon un mode de réalisation montré sur les figures 4, 5, 7, 8, 10, 11 et 14 du système d'étanchéité selon l'invention, le volume intérieur **12** du talon **11** du joint **10** se trouve entre les formes d'ancrage latéral **5** du profilé **2,** lesdites formes d'ancrage **5** formant resserrement ; cela permet un écrasement des côtés latérales **18, 19** du talon **11** qui facilite sa pose dans la rainure du profilé par insertion axiale de la partie d'accrochage **11** du joint **10** dans la rainure selon la direction transversale, à savoir selon l'axe B défini ci-dessus. De manière préférée, la clé s'insère dans ledit logement entre les formes d'ancrage latéral **5** du profilé rigide **2,** selon la direction longitudinale, à savoir selon l'axe A défini ci-dessus. Dans ce mode de réalisation, avantageusement le centre de la section de la clé **20** se trouve proche du resserrement local représenté par les formes d'ancrage latéral **4,5** du profilé **2** (ou à peu près à la même hauteur que ces derniers).

Selon un autre mode de réalisation montré sur les figures 12 et 13 le centre se trouve plus profondément dans le logement **3** du profilé **2,** et comme sur lesdites figures 12 et 13 toute la clé **20** peut se trouver au-delà dudit resserrement (vu de l'extérieur du profilé **2**), à l'intérieur du logement **3** du profilé **2.**

Dans un mode de réalisation la clé **20** est en appui sur les faces latérales **18,19** du talon **11.**

Dans autre un mode de réalisation, la clé **20** ne vient pas presser les faces latérales **18,19** du talon **11** contre les formes d'ancrage latéral **4,5,** mais évite seulement que lors de l'arrachement du joint **10** élastique lesdites faces latérales **18,19** ne puissent se comprimer vers l'intérieur du volume intérieur **12.** Autrement, il n'est pas nécessaire que les surfaces externes **14,15** de la clé **20** viennent en appui des côtés latérales **18, 19** du talon **11** et exercent (directement ou par bossage **16,17** interposé) une pression contre les côtés latérales **18, 19** du talon **11.** Il peut même y avoir un petit jeu entre la clé **20** et ses faces d'appui sur le talon **11** à l'intérieur de l'évidement **12** ; cela facilitera l'insertion de la clé **20** dans ledit évidement **12.**

Un avantage du système d'étanchéité selon l'invention est que la partie d'accrochage **11** du joint d'étanchéité **10** peut être très souple (notamment lorsque la forme de la partie d'accrochage (talon) **11** est telle que dans le système d'étanchéité, le volume intérieure **12** du talon **11** se trouve entre les formes d'ancrage latéral du profilé), permettant ainsi sa mise en place facilement sur le profilé **2** rigide avec un effort réduit. Cette mise en place du talon **11** du joint **10** dans le logement **3** du profilé **2** peut se faire perpendiculairement ou longitudinalement par rapport au logement **3** du profilé **2,** sachant que l'introduction perpendiculairement au logement du profilé (i.e. par insertion axiale du talon **11** du joint **10** dans la rainure selon une direction transversale) est beaucoup plus facile que son introduction longitudinale, surtout si le système d'étanchéité selon l'invention est conçu de manière à ce que le volume intérieur **12** du talon **11** se situe entre les formes d'encrage latéral **4,5** formant resserrement. La clé de verrouillage **20** qui est introduite simplement par un coulissement longitudinal dans le volume intérieur **12** du talon **11** du joint **10** assure alors un maintien ferme de la partie d'accrochage (talon) **11** en opposant une résistance à sa déformation, comme expliqué ci-dessus.

De plus pour le démontage la clé de verrouillage **20** peut coulisser longitudinalement dans le sens inverse pour être extraite, ce qui permet la déformation de la partie d'accrochage **11,** assurant facilement le retrait du joint d'étanchéité **10** lors d'opérations de maintenance et de remplacement du joint **10.** Le retrait du joint **10** peut ainsi être non destructif.

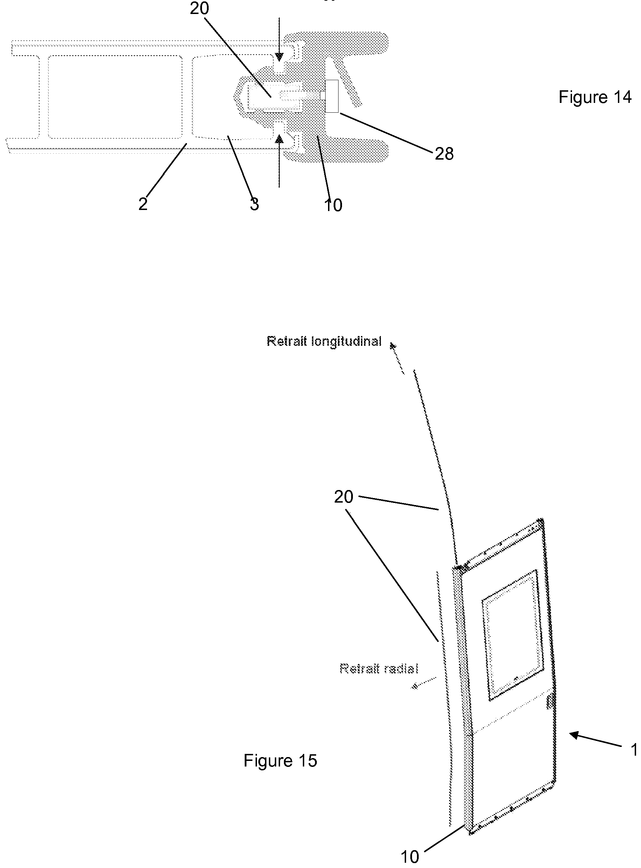

Comme montré sur la figure 15, le démontage du système d'étanchéité peut se faire de manière par arrachement radial, mais le système d'étanchéité selon l'invention ayant été conçu pour améliorer la résistance du joint **10** à l'arrachement, cette opération nécessiterait l'emploi d'outils spéciaux ou l'ouverture destructive du joint **10** avec un outil coupant permettant de sortir la clé **20** par un mouvement radial (si son épaisseur permet de passer par le resserrement local). Ainsi, selon l'invention, le démontage se fait par retrait longitudinal de la clé **20** (i.e. dans l'axe du joint **10**), éventuellement après retrait des moyens de fixation, suivi du retrait du joint **10.**

Un autre avantage du système d'étanchéité selon l'invention est qu'il présente une forte résistance à l'arrachement du joint **10,** tout en utilisant un joint facile à monter dans le profilé. En particulier il présente une forte résistance à l'arrachement axial selon une direction transversale selon l'axe B (figure 16) (la force d'arrachement venant dans le sens opposé au fond de la rainure), à l'arrachement par rotation (figure 17) et à l'arrachement par pelage (figure 18). L'action d'arrachement axial définie sur la figure 16 s'effectue selon un sens opposé de l'action d'insertion axiale de la partie d'accrochage **11** du joint **10** dans la rainure selon la direction transversale définie ci-dessus, matérialisée par l'axe B ; cette insertion se fait vers le fond **6** de la rainure, alors que l'arrachement se fait dans le sens opposé, à savoir à l'opposé du fond de cette rainure.

La clé **20** doit être fixée de manière à ce qu'elle ne sorte pas du joint **10** une fois le système d'étanchéité selon l'invention monté sur l'ouvrant **1** : un dépassement latéral même faible de la clé **20** est susceptible de gêner le fonctionnement de l'ouvrant **1.** On prévoit donc avantageusement un moyen de fixation qui empêche que la clé **20** ne puisse glisser longitudinalement en dehors du joint **10.** Il faut donc prévoir un moyen de fixation de la clé **20** dans le volume intérieur **12** du joint **10.**

Plusieurs moyens de fixation peuvent être utilisés seuls ou en combinaison. De préférence ces moyens de fixation sont des moyens réversibles, i.e. démontables sans risque d'endommager la clé ou le joint. A titre d'exemple, on peut fixer un bouchon à chaque extrémité du joint, obstruant ainsi l'évidement **12** du talon **11.** On peut aussi coller la clé **20** elle-même contre la paroi interne de l'évidement du talon, par exemple à l'aide d'un colle souple épaisse de type polyuréthane. On peut également mettre en place un axe dans le plan horizontal, arrêtant la ou les translations de la clé suivant l'axe vertical : cet axe peut notamment être une goupille ou une vis. On peut également mettre en place une vis **28** liant le joint **10** à la clé **20** ; cette vis **28** peut être auto-taraudeuse dans le matériau de la clé **20.** Un tel mode de réalisation est montré sur la figure 14.

La clé **20** peut être réalisée en différents matériaux : élastomère, thermoplastique, thermodur, métallique, ou d'autres matériaux solides appropriés. La matériau de la clé **20** peut être plus dur que celui du joint **10,** ou de dureté comparable, ou encore plus souple.

Dans un mode de réalisation particulier, la clé **20** n'est pas formée en un matériau solide massif mais en un matériau fluide. Ledit matériau fluide peut par exemple être un liquide ou encore un matériau solide granuleux : par exemple du sable ou des granulés de polymère.

Le système d'étanchéité selon l'invention peut être utilisé sur tout type d'ouvrants. En particulier il peut être utilisé pour les ouvrants intérieurs et extérieurs de véhicules ferroviaires (notamment trains, tramways, métro), maritimes, routiers.

## Revendications

1. Système d'étanchéité pour un ouvrant (1) comportant un profilé (2) rigide et un joint d'étanchéité (10), ledit profilé (2) présentant un logement (3) apte à recevoir une partie d'accrochage (11) souple dudit joint d'étanchéité (10), ledit logement (3) dudit profilé (2) comprenant des formes d'ancrage latérales (4,5) tournées vers la partie d'accrochage (11), ladite partie d'accrochage (11) souple du joint (10) comprenant des formes d'accrochage latérales (21,22) aptes à coopérer avec lesdites formes d'ancrage latérales (4,5) du profilé (2), **caractérisé en ce que**:
- ladite partie d'accrochage (11) souple du joint comporte un volume intérieur (12) se situant entre lesdites formes d'ancrage latérales (4,5), ledit volume intérieur (12) étant destiné à recevoir un matériau formant une clé de verrouillage (20) prévue pour être introduite longitudinalement après la mise en place du joint d'étanchéité (10) dans ledit logement (3), cette clé (20) assurant un blocage desdites formes d'accrochage latérales (21,22) de la partie d'accrochage (11) du joint (10) sur lesdites formes d'ancrage latérales (4,5) du profilé (2).

2. Système d'étanchéité selon la revendication 1, **caractérisé en ce que** ledit profilé (2) est pris en sandwich par des tôles (9a, 9b) sensiblement parallèles, formant peau extérieure et intérieure dudit ouvrant (1).

3. Système d'étanchéité selon la revendication 2, **caractérisé en ce que** lesdites tôles (9a,9b) sont fixées directement sur les faces latérales (29a,29b) du profilé (3), de préférence par collage.

4. Système d'étanchéité selon l'une quelconque des revendications 1 à 3, **caractérisé en ce que** lesdites formes d'accrochage latérales (21,22) dudit joint d'étanchéité (10) comprennent des protubérances (21) et des encoches ou entailles (22a,22b).

5. Système d'étanchéité selon la revendication 4, **caractérisé en ce que** lesdites formes d'ancrage latérales (4,5) du profilé (2) se projettent dans lesdites encoches ou entailles (22a,22b) de la partie d'accrochage (11) du joint (10) et sont bloquées par lesdites protubérances (21) de la partie d'accrochage (11) du joint (10), empêchant ainsi l'arrachement du joint (10).

6. Système d'étanchéité selon l'une quelconque des revendications 1 à 5, comprenant en outre ladite clé (20), ladite clé étant reçue dans ledit volume intérieur (12).

7. Système d'étanchéité selon la revendication 6, **caractérisé en ce qu'**il comprend des bossages (16,16b ; 17a,17b) se trouvant directement sur la clé (20) et/ou en face de cette clé sur les côtés latéraux (18,19) de la partie d'accrochage (11).

8. Système d'étanchéité selon la revendication 6 ou 7, **caractérisé en ce qu'**il comporte un système de fixation longitudinal de la clé de verrouillage (20).

9. Système d'étanchéité selon l'une quelconque des revendications 6 à 8, ou joint (10) pour système d'étanchéité selon l'une quelconque des revendications 6 à 8, **caractérisé en ce que** ladite clé (20) est un profilé.

10. Système d'étanchéité selon l'une quelconque des revendications 6 à 9, ou joint (10) pour système d'étanchéité selon l'une quelconque des revendications 6 à 9, **caractérisé en ce que** ladite clé (20) se trouve entre lesdites formes d'accrochage latérales (21,22) du joint (10).

11. Système d'étanchéité selon l'une quelconque des revendications 6 à 10, ou joint (10) pour système d'étanchéité selon l'une quelconque des revendications 6 à 10, **caractérisé en ce que** ladite clé (20) est un matériau fluide, de préférence un liquide ou un solide granulaire.

12. Procédé de montage d'un système d'étanchéité selon l'une quelconque des revendications précédentes, **caractérisé en ce qu'**il comporte une étape d'insertion axiale de la partie d'accrochage (11) du joint d'étanchéité (10) dans le logement (3) du profilé (2) rigide, puis une étape d'introduction longitudinale de la clé de verrouillage (20) dans le volume intérieur (12) de ladite partie d'accrochage (11) du joint (10).

13. Procédé de démontage d'un système d'étanchéité selon l'une quelconque des revendications 1 à 11, **caractérisé en ce qu'**il comporte une étape de retrait longitudinal de la clé de verrouillage (20) hors du volume intérieur (12), pour permettre de sortir le joint (10) du profilé rigide (3), de préférence par arrachement axial.

14. Ouvrant (1) de véhicule, notamment ferroviaire, comprenant un système d'étanchéité, **caractérisé en ce que** ce système d'étanchéité est réalisé selon l'une quelconque des revendications 1 à 11 sur tout ou partie de son pourtour.

## Patentansprüche

1. Dichtungssystem für eine Öffnung (1) mit einem starren Profil (2) und einer Dichtung (10), wobei das Profil (2) ein Gehäuse (3) aufweist, das einen flexiblen Befestigungsabschnitt (11) der besagten Dichtung (10) aufnehmen kann, wobei besagtes Gehäuse (3) des besagten Profils (2) seitliche Verankerungsformen (4,5) aufweist, die dem Befestigungsabschnitt (11) zugewandt sind, und wobei besagter flexibler Befestigungsabschnitt (11) der Dichtung (10) seitliche Befestigungsformen (21, 22) umfasst, die mit den seitlichen Verankerungsformen (4, 5) des Profils (2) zusammenwirken können,
**dadurch gekennzeichnet, dass** besagter flexibler Befestigungsabschnitt (11) der Dichtung ein Innenvolumen (12) aufweist, das zwischen den seitlichen Verankerungsformen (4,5) liegt, wobei besagtes Innenvolumen (12) ein Verriegelungsschlüsselmaterial (20) aufnimmt, das zum Einführen in Längsrichtung bestimmt ist, nachdem die Dichtung (10) in das Gehäuse (3) eingesetzt worden ist, wobei dieser Schlüssel (20) eine verriegelung der genannten seitlichen Befestigungsformen (21,22) des Befestigungsabschnittes (11) der Dichtung (10) an den seitlichen Verankerungsformen (4, 5) des Profils (2) sicherstellt.

2. Dichtungssystem nach Anspruch 1, **dadurch gekennzeichnet, dass** das Profil (2) zwischen im Wesentlichen parallelen Blechen (9a,9b) angeordnet ist, die eine Außen- und Innenhaut der Öffnung (1) bilden.

3. Dichtungssystem nach Anspruch 2, **dadurch gekennzeichnet, dass** die Bleche (9a, 9b) direkt an den Seitenflächen (29a, 29b) des Profils (3) befestigt sind, vorzugsweise durch Verkleben.

4. Dichtungssystem nach irgendeinem der Ansprüche 1 bis 3, **dadurch gekennzeichnet, dass** die seitlichen Befestigungsformen (21, 22) der Dichtung (10) Vorsprünge (21) und Kerben oder Einkerbungen (22a, 22b) aufweisen.

5. Dichtungssystem nach Anspruch 4, **dadurch gekennzeichnet, dass** die seitlichen Verankerungsformen (4, 5) des Profils (2) in die Kerben oder Einkerbungen (22a, 22b) des Befestigungsabschnittes (11) der Dichtung (10) hineinragen und durch die Vorsprünge (21) des Befestigungsteils (11) der Dichtung (10) blockiert sind, wodurch ein Herausreißen der Dichtung (10) verhindert wird.

6. Dichtungssystem nach irgendeinem der Ansprüche 1 bis 5, ferner umfassend besagten Schlüssel (20), der in besagtem Innenvolumen (12) aufgenomment wird.

7. Dichtungssystem nach Anspruch 6, **dadurch gekennzeichnet, dass** es Ausbuchtungen (16, 16b, 17a, 17b) aufweist, die direkt am Schlüssel (20) und / oder vor diesem Schlüssel angeordnet sind an den lateralen Seiten (18,19) des Befestigungsabschnitts (11).

8. Dichtungssystem nach einem der Ansprüche 6 oder 7, **dadurch gekennzeichnet, dass** es ein Längsbefestigungssystem des Verriegelungsschlüssels (20) umfasst.

9. Dichtungssystem nach irgendeinem der Ansprüche 6 bis 8, oder Dichtung (10) für ein Dichtungssystem nach irgendeinem der Ansprüche 6 bis 8, **dadurch gekennzeichnet, dass** besagter Schlüssel (20) ein Profil ist.

10. Dichtungssystem nach irgendeinem der Ansprüche 6 bis 9, oder Dichtung (10) für ein Dichtungssystem nach irgendeinem der Ansprüche 6 bis 9, **dadurch gekennzeichnet, dass** besagter Schlüssel (20) zwischen den seitlichen Befestigungsformen (21, 22) der Dichtung (10) liegt.

11. Dichtungssystem nach irgendeinem der Ansprüche 6 bis 10, oder Dichtung (10) für ein Dichtungssystem nach irgendeinem der Ansprüche 6 bis 10, **dadurch gekennzeichnet, dass** der Schlüssel (20) ein fluides Material ist, vorzugsweise eine Flüssigkeit oder ein körniger Feststoff.

12. Verfahren zum Montieren eines Dichtungssystems nach irgendeinem der vorhergehenden Ansprüche, **dadurch gekennzeichnet, dass** es einen axialen Einführschritt des Befestigungsabschnitts (11) der Dichtung (10) in das Gehäuse (3) des starren Profils (2) umfasst, sowie einen Schritt des Einführens des Verriegelungsschlüssels (20) in Längsrichtung in das Innenvolumen (12) des Befestigungsabschnitts (11) der Dichtung (10).

13. Verfahren zum Demontieren eines Dichtungssystems nach irgendeinem der Ansprüche 1 bis 11, **dadurch gekennzeichnet, dass** es einen Schritt umfasst, bei dem der Verriegelungsschlüssels (20) in Längsrichtung aus dem Innenvolumen (12) herausgezogen wird, um zu ermöglichen, dass die Dichtung (10) vorzugsweise durch axiales Herausreißen von dem starren Profil (3) entfernt warden kann.

14. Fahrzeugöffnung (1), insbesondere für Schienenfahrzeug, mit einem Dichtungssystem, **dadurch gekennzeichnet, dass** dieses Dichtungssystem ganz oder teilweise an seinem Umfang nach irgendeinem der Ansprüche 1 bis 11 hergestellt ist.

## Claims

1. Sealing system for an openable panel (1) comprising a rigid profile member (2) and a seal (10), said profile member (2) having a recess (3) capable of receiving a flexible coupling portion (11) of said seal (10), said recess (3) of said profile member (2) including side anchor shapes (4, 5) facing the coupling portion (11), said flexible coupling portion (11) of the seal (10) comprising side coupling shapes (21, 22) capable of engaging with said side anchor shapes (4, 5) of the profile member (2),
**characterized in that**:
said flexible coupling portion (11) of the seal comprises an inner space (12) located between said side anchor shapes (4, 5), said inner space (12) receiving a material forming a locking key (20) provided such as to be inserted longitudinally after the seal (10) has been placed in said recess (3), this key (20) ensuring locking of said side coupling shapes (21, 22) of the coupling portion (11) of the seal (10) on said side anchor shapes (4, 5) of the profile member (2).

2. Sealing system according to claim 1, **characterized in that** said profile member (2) is sandwiched between substantially parallel sheets (9a, 9b), forming an outer and inner skin of said openable panel (1).

3. Sealing system according to claim 2, **characterized in that** said sheets (9a, 9b) are fastened directly onto the lateral faces (29a, 29b) of the profile member (3), more preferably by gluing.

4. Sealing system according to any of claims 1 to 3, **characterized in that** said side coupling shapes (21, 22) of said seal (10) include protuberances (21) and notches or slits (22a, 22b).

5. Sealing system according to claim 4, **characterized in that** said side anchor shapes (4, 5) of the profile member (2) project into said notches or slits (22a, 22b) of the coupling portion (11) of the seal (10) and are locked by said protuberances (21) of the coupling portion (11) of the seal (10), preventing as such the pulling off of the seal (10).

6. Sealing system according to any of claims 1 to 5, comprising said key (20).

7. Sealing system according to claim 6, **characterized in that** it comprises bosses (16, 16b; 17a, 17b) located directly on the key (20) and/or opposite this key on the lateral sides (18, 19) of the coupling portion (11).

8. Sealing system according to claim 6 or 7, **characterized in that** it comprises a system for the longitudinal fastening of the locking key (20).

9. Sealing system according to any of claims 6 to 8, or seal (10) for sealing system according to any of claims 6 to 8, **characterized in that** said key (20) is a profile member.

10. Sealing system according to any of claims 6 to 9, or seal (10) for sealing system according to any of claims 6 to 9, **characterized in that** said key (20) is located between said side coupling shapes (21, 22) of the seal (10) .

11. Sealing system according to any of claims 6 to 10, or seal (10) for sealing system according to any of claims 6 to 10, **characterized in that** said key (20) is a fluid material, more preferably a liquid or a granular solid.

12. Method for assembling a sealing system as claimed in any preceding claim, **characterized in that** it comprises a step of axial insertion of the coupling portion (11) of the seal (10) in the recess (3) of the rigid profile member (2), then a step of longitudinal insertion of the locking key (20) into the inner space (12) of said coupling portion (11) of the seal (10).

13. Method for disassembling a sealing system according to any of claims 1 to 11, **characterized in that** it comprises a step of longitudinal withdrawal of the locking key (20) outside of the inner space (12), in order to make it possible to remove the seal (10) from the rigid profile member (3), more preferably via axial pulling off.

14. Openable panel (1) of a vehicle, in particular a railway vehicle, comprising a sealing system, **characterized in that** this sealing system is carried out according to any of claims 1 to 11 over all or a portion of its periphery.
